# EUROPEAN PATENT SPECIFICATION

(11) **EP 0 907 487 B1**
(45) Date of publication and mention of the grant of the patent: **22.01.2003**
(21) Application number: 97923380.6
(22) Date of filing: 13.05.1997
(51) Int. Cl.: B29C 45/30

(54) **METHOD AND SYSTEM FOR INJECTION MOULDING OF THERMOPLASTS AND THERMOELASTOMERS**
VERFAHREN UND SYSTEM ZUM SPRITZGIESSEN VON KUNSTSTOFFEN UND VON THERMOPLASTISCHEN ELASTOMEREN
PROCEDE ET SYSTEME POUR MOULAGE PAR INJECTION DE THERMOPLASTIQUES ET THERMO-ELASTOMERES

(30) Priority: 13.05.1996 SE 9601803
(43) Date of publication of application: 14.04.1999
(73) Proprietor: Flexiject Innovation HB, 441 57 Alingsas (SE)
(72) Inventor: KARLSSON, Lennart, S-441 57 Alingsas (SE)
(74) Representative: Hammond, Andrew David
(86) International application number: SE9700781
(87) International publication number: WO97043105

(56) References cited:
- EP-A- 0 229 689
- EP-A- 0 336 748
- EP-A- 0 452 611
- EP-A- 0 491 332
- DE-A- 1 729 333
- DE-A- 2 357 666
- PATENT ABSTRACTS OF JAPAN, Vol. 10, No. 231, M-506; & JP,A,61 063 428, (NIPPON DENSO CO LTD), 1 April 1986.

## Description

The present invention refers to a system and a method for injection moulding of thermoplastics and thermoplastic elastomers in an injection moulding machine.

At injection moulding of plastic details is used a die having one or more cavities, which is set up in an injection moulding machine.

In order to be able to produce plastic details of high quality from a die having several cavities, a so called multiple cavity die, the cavities with the associated sprues must be substantially identical with respect to flow resistance for the plastics melt during the filling procedure, and furthermore the volumes of the cavities must be equally big, whereby all cavities are filled up with the melt at the same time, whereupon the melt at the same time also is subjected to compression and post pressure. This means that the plastic details must be alike with reference to material thickness, size and weight and they must have substantially the same shape.

At injection moulding in a single cavity with a process cycle time of e.g. about 30 seconds, the annual manufacturing capacity will be about 500.000 pieces. If the annual demand is at this level or lower, it thus is sufficient to produce using a 1-cavity die in a machine, which is chosen so that mould clamping force, platen size, shot weight, etcetera, are sufficient for the die. The process cost per piece at injection moulding in a 1-cavity die however will be higher as compared to injection moulding in multiple cavity dies. At production of medium-seized annual numbers, about 100 - 500.000 details, it therefore usually is profitable to produce in multiple cavity dies, even if these have a higher initial cost than a 1-cavity die for the same detail.

From this it is possible to deduct that die and process systems, that can offer injection moulding of several details, each one having different weight, size and shape, simultaneously in one and the same process cycle, should be economically favourable, under presumption that said system has a reasonable initial cost in relation to the overall cost reduction regarding process and die costs, that can be achieved in comparison with production of the same details with conventional 1- or multiple cavity dies.

Such die or process systems can be provided with different degrees of individual adjustment possibilities for the process parameters in the different cavities. The most simple design has only two possibilities for adjustment of the melt flow to the different cavities, with variable or fixed adjustment means. Hereby it is possible to produce several different plastic details with smaller differences in weight, size and shape in the same die system. By further providing a closing/opening valve, e.g. a valve known as a needle valve in the flow channel for each cavity, it is also possible to use different filling times for the different cavities. Plastic details having rather big mutual differences in weight, size and shape then can be produced in such a system. The pressure development for the melt during the compression and post pressure phases, which is essential for the quality of the plastic detail, however can not be chosen individually for each cavity in this system, which is an essential limitation if there is a demand that the different plastic details produced shall have a high and equivalent quality.

JP-A-61063428 describes a mould assembly incorporating a runner, opening in a number of cavities in a mould with a pressure sensor in every cavity, a torpedo provided in a gate in front of each cavity, which torpedos are arranged to be positioned in every gate in response to a pressure signal from said sensor compared in a computer with a stored pressure value. This mould assembly has no provisions for final filling compression.

The invention hereinafter described offers a flexible die system and method, by means of which details of completely different weight, size and shape, can be injection moulded in injection moulding machines of standard design for thermoplastics and thermoplastic elastomers, in one and the same process cycle. For each cavity of the die units, which form part of the system, the process parameters can be individually chosen to a very high degree, primarily what concerns the pressure development during the compression and post pressure phases and the post pressure time, whereby all plastic details will get a high and equivalent quality.

The only hitherto known alternative for obtaining a similar high degree of individually electable process parameters for the different cavities/die units, is using an injection moulding machine provided with several separate injection units, which are each connected to the different die units of the system. The initial cost for such a machine however is high, whereby it might be difficult to achieve a good economy with such a system.

The present invention refers to a system and a method for use in injection moulding machines of standard design for thermoplastics and thermoplastic , in order simultaneously to injection mould details with different weight, shape and size in a system with different die units for these details.

The purpose of the invention is to give to the different die units a possibility of a very high degree of individual choice of the process parameters which are deciding for the quality of the plastic detail moulded in the die unit.
These parameters are
- melt flow (injection moulding speed) as a function of time,
- pressure development in the melt during compression and post pressure phases,
- post pressure time,
- melt temperature,
- die temperature,
wherein the two last mentioned parameters can be varied within the intervals recommended for the plastic material concerned.

Common parameters for die units and processes are
- mould clamping force,
- process cycle time.

This purpose has been achieved at a system for injection moulding of thermoplastics and thermoplastic elastomers in an injection moulding machine in order simultaneously to injection mould details with different weight, shape and size, and incorporating a feeder block, a number of hot runner modules each connected to one of a number of flow channels provided in the feeder block, a torpedo provided in the flow channel or in the hot runner module, respectively for individual and infinite adjustment of the melt flow through the module, and means for bringing about final filling, compression of the melt and changing-over to and maintaining of post pressure, and a control unit, which in dependency of a starting signal from a control device forming part of the injection moulding machine, for each hot runner module exerts individual control and supervision of the developments in the different hot runner modules, by the features defined in the characterizing part of claim 1.

Hereinafter the invention will be further described with reference to embodiments shown in the accompanying drawings, which show details from two different variants of an injection moulding machine incorporating the system according to the invention.

Fig. 1 shows a partial section through a portion of a hot runner module according to a first embodiment of the invention.

Fig. 2 shows a partial section through a second embodiment of a hot runner module according to the invention.

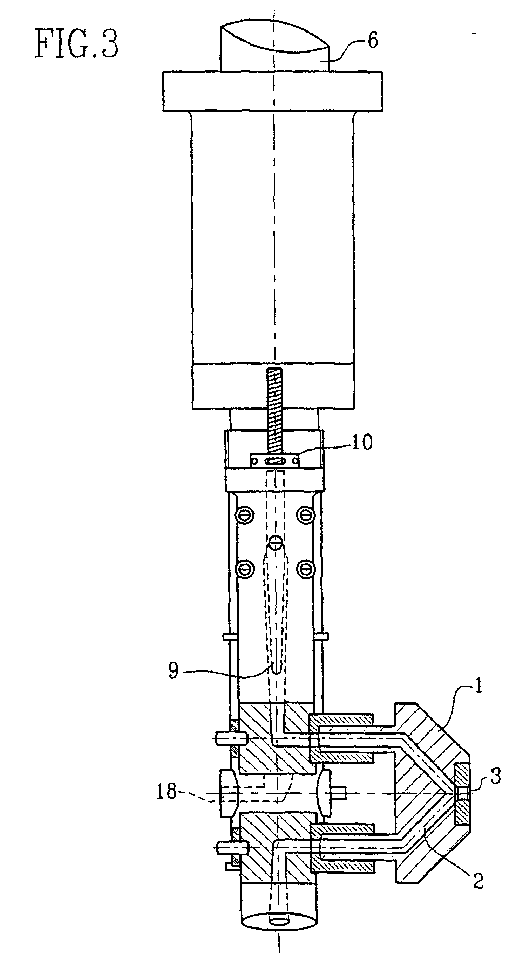

Fig. 3 is a view, partly in cross section of the hot runner module shown in Fig. 2 and seen straight from above according to Fig. 2.

Fig. 4 is a view as seen from the parting plane of the mould, showing hot runner modules, with a portion of a driving device mounted in a system for two mould units.

Fig. 5 is a side view wherein are shown the feeder block, the hot moulding nozzles for the mould units and the fixed splits of one of the mould units.

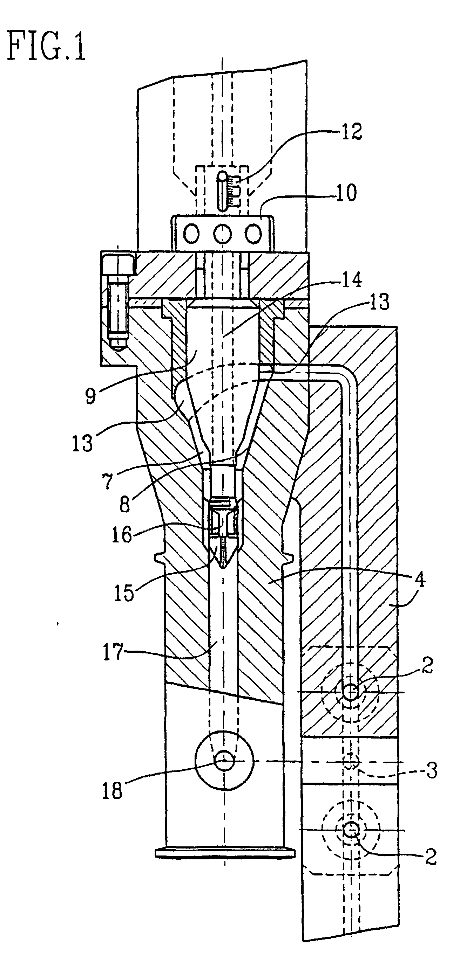

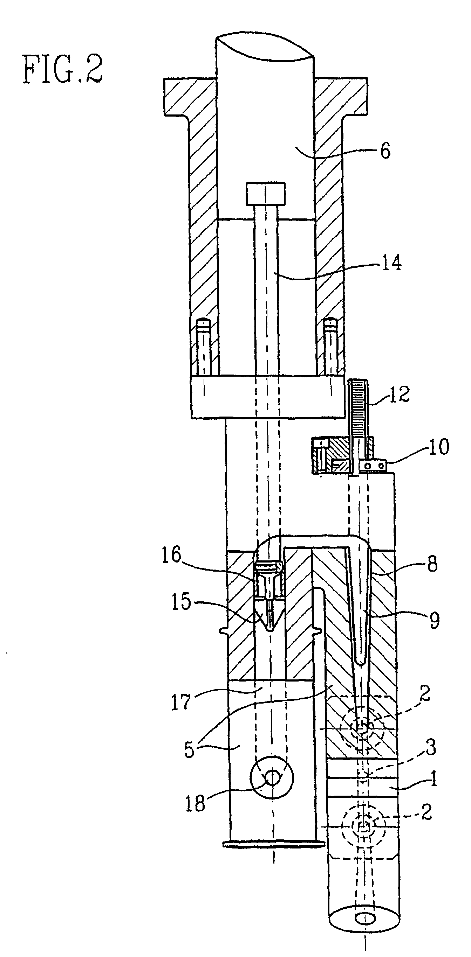

The main components of the system, which are shown in Fig. 1 and 2 and are made in accordance with the invention, are a feeder block 1, and a plurality of hot runner modules 4 or 5 connected thereto. The feeder block has channels 2, which distribute the melt flow in Fig. 1 and 2 respectively, from the injection unit 3 of the machine into several separate flows of melt to each one of the associated hot runner modules, of which the cylinders 4 and 5 of one each are shown in the figures.

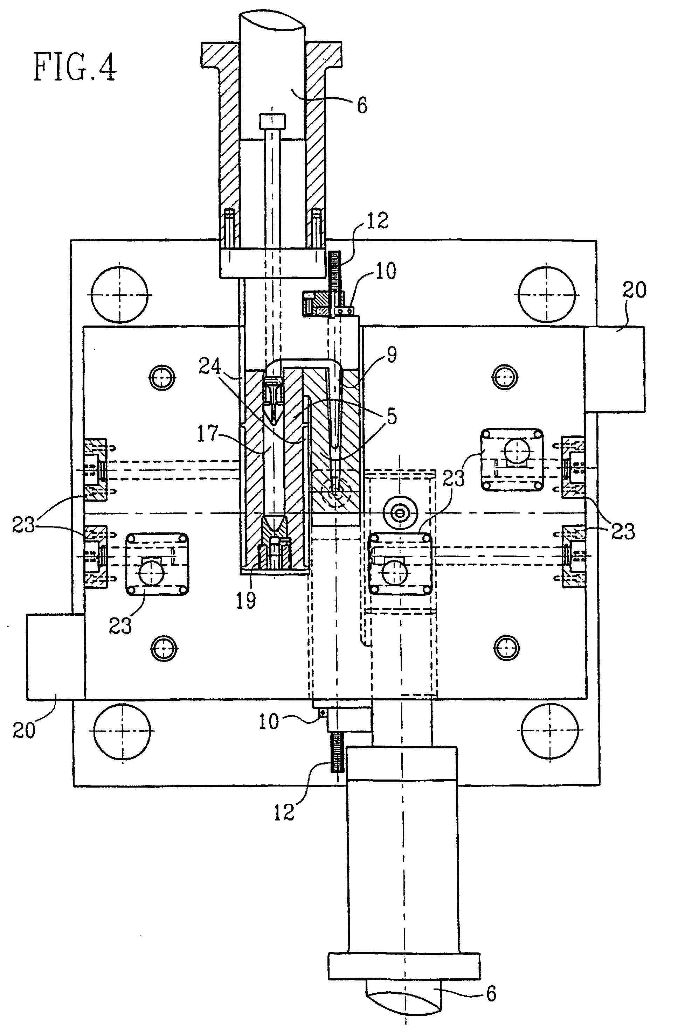

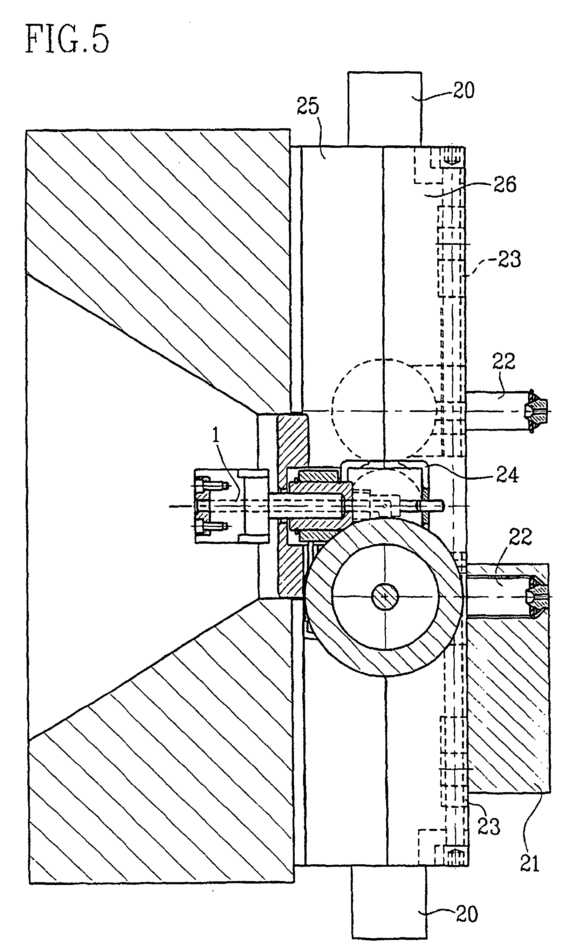

A driving device 6, partly shown in Fig. 2 and 4, is connected to the hot runner module, and which imparts motion and force to mechanisms built into the hot runner module for causing in the associated die unit 21 in Fig. 5 an individual filling, compression and post pressure function to the melt which shall form a plastic detail in the cavity of the mould unit. Furthermore there is a not further shown control unit for individual control and supervision of the above mentioned injection moulding process in the different hot runner modules/die units. The flow resistance for the flow of melt in the hot runner module can be varied by manual adjustment of a mechanism, such as will be described in the following. The flow channel of the hot moulding module communicates with the flow channels and the cavities of the associated mould unit via a hot runner nozzle 22 in Fig. 5, which is fitted to the cylinder of the hot runner module, or via a not shown cold moulding bushing, which is arranged in the die unit. The die units are mounted in the moulding system with easily detachable attachment means 23 (Fig. 4 and 5), which gives rapid change-over between different plastic details during progressive production.

The feeder block 1 in Fig. 2 and 5 is heated to the temperature of the melt and is positioned in the centre hole of the machine platen, but with an intermediate air slot, thus that it is insulated from the platen. The cylinders 4 and 5 of the hot runner module are also heated to the temperature of the melt and are insulated by means of air slots 24 in Fig. 4 and 5 from surrounding support plates 25 and 26 in Fig. 5. In cylinder 4 in Fig. 1, there is a hollow through channel 7, which is partly filled out by a torpedo 9, which is infinitely axially adjustable against a seat 8 in the cylinder, thus that the distance between its tapering head and the seat 8 in the cylinder can be adjusted in order thereby to set the flow resistance for the melt through the cylinder. The embodiment according to Fig. 2 has the corresponding function for setting the flow resistance in the smaller cylinder, which is situated closest to the feeder block 1. The axial motion of the torpedo 9 is obtained by means of a displacement mechanism, e.g. such as shown a screw mechanism 10. The current position and the axial displacement of the torpedo can be red on a scale 12 (Fig. 1 and 2). For each mould unit an axial adjustment position has been established for the torpedo, i.e. a value on the scale, which gives a melt flow adapted thus that an appropriate filling time is obtained for the cavity. This adjustment of the torpedo, specific to each die unit shall always be used, independent of the combination of other die units, which the said die unit is processed together with. The flow channel 2 from the feeder block 1 in Fig. 1, opens in an annular channel 13 arranged at the biggest diameter of the tapering head of the torpedo. This annular channel, like the other flow channels are correctly designed from a flow technical point of view, whereby the plastic melt will not be stationary at any position and thereby become thermally degraded, resulting in a poor plastic detail quality.

The torpedo 9 according to Fig. 1 is provided with a hole extending straight through its centre, and through which extends a bar 14, which at one of its ends is equipped with a tip 15 and a stop ring 16 of the same type as at a usual plasticizing screw for injection moulding machines. Thereby this stop ring can act as a ram in the space 17 located in front of the tip 15, i.e. the stroke volume of the ram. The opposite end of the bar is situated outside the torpedo and is connected to an only partly shown driving device 6 in Fig. 2 and 4, e.g. an electrical servo motor coupled to a roller screw, which provides motion and force in axial direction to the bar. In the figures the ram 15 and 16 is in its initial position, whereby filling of the cavity can be accomplished directly from the injection unit of the machine. In order to get the lowest possible flow resistance for the flow of melt, the block has three uniformly distributed flow channels, at tip and stop ring, with intermediate supporting surfaces for the stop ring. The cylindrical space 17 corresponds to 10-20% of the maximum volume of plastic material, which the system can fill into each die unit.

In the outlet 18 from the hot runner modules 4 (Fig. 1) and 5 (Fig. 2) of the mould unit it is possible to arrange a pressure sensor 19, (Fig. 4 ) for measuring the pressure of the melt and this sensor is connected to the control unit, for supervision of the melt pressure development during the filling phase, the change-over point and the post pressure phase.

Each hot runner module also has separate contact means 20, in Fig. 4 and 5, for cabling to heating elements and thermo sensors provided in the cylinders 4 and 5 and in the feeder block 1.

The function development for a complete process cycle of the system according to the invention will be described hereinafter.

The ram mechanism in the hot runner module can be given two alternative function developments.

In the first alternative, when it is assumed that the weight of the plastic melt, which is accommodated within the stroke volume 17 is bigger than the total weight of detail(s) and cold moulding channel(s) in the associated die unit, the ram can start at the same time as the screw piston of the injection unit of the machine and thereby itself provide for the entire filling phase and compression and post pressure phases in the process cycle for the associated die unit.

At the second alternative, when the weight of the plastic melt accommodated within the stroke volume 17 is supposed to be lower than the total weight of detail(s) and cold moulding channel(s) the filling of the die unit must be partly effected by the injection unit of the machine, whereupon final filling, compression and post pressure phases are carried out by the ram 15, 16 in the hot runner module.

The flow resistances in each hot runner module with a function according to the second alternative are set to values, which have been established at outcome test runs for every die unit.
The flow resistance in each hot runner module with a function according to the first alternative is on the other hand set to the lowest value.

The characterizing function for the system according to the invention of the second alternative, that the ram mechanism in each hot runner module, due to its individually controllable motion and force creating function, can take over the filling function at any optional time during the filling of the mould unit executed by the injection unit, and finish filling, compression and change-over to and accomplish the post pressure phase, is obtained in that the screw piston of the injection unit of the machine during its advance movement reaches several different sensor positions, one for each hot runner module, set to function according to the second alternative, whereby each one of the sensors give a signal to the control unit of the injection unit to lower the injection speed, i.e. the flow of melt, with a value which is usually equal to the melt flow which flows through the receiving hot mould module at this time. In parallel with the above said sensor system belonging to the machine, there is provided another sensor system belonging to the system according to the invention, wherein the sensors are also actuated when the screw piston of the machine injection unit reaches their different positions, but wherein the signal from the different sensors is utilized for starting the driving device for the ram mechanism in each hot runner module. These sensors, arranged in pairs, one from each system, with reference to their positions, can be carefully adjusted relative to each other, whereby the starting time for the ram of the hot runner module can be postponed or put earlier in relation to the time set for melt flow reduction in the injection unit of the machine. Thereby it is possible to avoid, entirely or partly, that a very acute, but process disturbing deviation in the melt pressure and flow development, a so called transient, will result at the passing over of the process from the injection unit of the machine to the ram mechanism of the hot runner module.

An essential advantage with the system according to the invention is that the plastification for the subsequent process cycle can be started from the time when all ram mechanisms in the system have been activated. This property of the system makes it possible in certain applications to obtain a shorter process cycle time as compared to injection moulding with a moulding system, which in this respect is conventional, e.g. when the details have high weights or when using plastic material, which requires a lenient mechanical treatment by the screw piston, i.e. low rotational speed during the plastification, which results in an extended plastification time.

Another advantage of the system according to the invention is that the change-over point, i.e. where the filling phase is succeeded by a post pressure phase, by smaller amendments of the filling times for the different die units, can be placed at different times in the process cycle, whereby the melt pressure peaks, which are connected to the change-over point, will not take place at the same time. Hereby it is possible to use a lower mould clamping force for the machine as compared to conventional multiple cavity injection moulding of the same details.

The invention is not limited to the embodiment schematically illustrated in the drawings and described in connection thereto but modifications are possible within the scope of the following claims.

## Claims

1. System for injection moulding of thermoplastics and thermoplastic elastomers in an injection moulding machine for injection moulding articles of different weight, size and shape, simultaneously in only one process cycle, and comprising a feeder block (1), a number of hot runner modules (4, 5), each connected to its own one of a number of flow channels (2) provided in the feeder block, a torpedo (9) provided in the flow channel for each hot runner module and intended for stepless adjustment of the melt flow through the module, and means for causing final filling, compression and change-over to and maintaining of post pressure, and a control unit for individual control and supervision of the processes in the different hot runner modules,
**characterized therein**,
that the flow channel of the hot runner module is provided with a movable bar (14) extending axially therethrough, and which at its forward end is designed as a ram (15, 16), which is adapted to operate in a melt channel space (17) downstream of the torpedo (9) for causing final filling, compression, change-over to post pressure and maintaining this, and which bar is connected to an individual driving device arranged to give the bar axial motion and pressure force under control from the control unit.

2. System according to claim 1,
**characterized therein**,
that the torpedo (9) is arranged axially adjustable in the flow channel in the different hot runner modules and is provided with an axially longitudinal through-hole (7), through which extends the axially movable bar (14), which at its end projecting from the forward part of the torpedo is designed as said ram (15, 16).

3. System according to claim 1,
**characterized therein**,
that the torpedo (9) is arranged in a conically shaped flow channel in a cylinder forming part of the hot runner module (5), wherein said cylinder is arranged to connect the flow channel (2) in the feeder block (1) with a part of the hot runner module, which incorporates said ram (15, 16).

4. System according to anyone of claims 1 to 3,
**characterized therein**,
that position sensors are connected to the control unit of the system, which position sensors are arranged in pairs with position sensors of the injection unit, and which are adjustable in position in relation to these and whereby this adjustability will give an entirely or partial transient free change-over when the means for speed and force generation belonging to a hot runner module takes over the flow and pressure developments of the melt from the injection unit of the machine.

5. System according to anyone of claims 1 to 4,
**characterized therein**,
that the torpedo (9), in a manner known per se, has a substantially tapering end and is manually displaceable in axial direction towards and away from a tapering seat (8) for individual adjustment of the melt flow resistance in the flow channel of each hot runner module, and that the axial displacement is adjusted by means of a displacement mechanism, in the form of a screw mechanism (10), wherein a nut forming part thereof can be manually turned thus that a threaded portion of the shaft in one end of the torpedo cooperating therewith is axially displaceable and thereby also the entire torpedo (9).

6. System according to claim 5,
**characterized therein**,
that a scale (21) is provided for reading the current position of the torpedo and its axial displacement.

7. System according to anyone of the preceding claims,
**characterized therein**,
that a pressure sensor (19) connected to the control unit is arranged at the opening of each melt channel (17) downstream of the torpedo (9), or the ram (15, 16), respectively.

8. A method for injection moulding of thermoplastics and thermoplastic elastomers in an injection moulding machine for simultaneously axially displaceable moulding in the same process cycle details of different weight, size and shape in a system having different die units, by means of a device incorporating a feeder block (1), a number of hot runner modules (4, 5), each connected to its own of a number of flow channels (2) provided in the feeder block, a torpedo (9) provided in the flow channel for each hot runner module and intended to adjust the melt flow through the module in a stepless manner, and means for causing final filling, compression and change-over to and maintaining post pressure, and a control unit for individual control and supervision of the processes in the different hot runner modules, with use of a system according to claim 1,
**characterized therein**,
that the melt flow from the feeder block is controlled in the different hot runner modules, by means of individual setting of the axial position of the associated torpedo (9), whereby is obtained different filling times in order to distribute in time, pressure peaks in the different hot runner modules (5, 5) and die units of the injection moulding system.

## Patentansprüche

1. System zum Spritzgiessen von thermoplastischen Werkstoffen und thermoplastischen Elastomeren in einer Spritzgiessmaschine für Spritzgussartikel von unterschiedlichem Gewicht, Grösse und Form gleichzeitig in nur einer Verfahrensfolge, und umfassend einen Zuteilerblock (1), eine Anzahl von Heißkanaldüsen- Modulen (4; 5), die jeweils mit ihrem eigenen von einer Anzahl von in dem Zuteilerblock vorgesehenen Durchflusskanälen (2) verbunden sind, einen in dem Durchflusskanal für jeden Heißkanaldüsen- Modul vorgesehenen Verdrängungskörper (9) zur stufenlosen Einstellung des Schmelzflusses durch den Modul, und Mittel, um das Nachfüllen, Verdichten und Umstellen auf Nachdruck und Halten desselben zu bewirken, sowie eine Steuereinheit zur unabhängigen Steuerung und Überwachung der Prozesse in den unterschiedlichen Heißkanaldüsen- Modulen,
**dadurch gekennzeichnet, dass**
der Durchflusskanal des Heißkanaldüsen- Moduls mit einer beweglichen Stange (14) versehen ist, die sich in axialer Richtung durch diesen erstreckt und an ihrem vorderen Ende als Kolben (15, 16) ausgelegt ist, der angepaßt ist, so dass er in einem Schmelze- Kanalraum (17) stromabwärts des Verdrängungskörpers (9) wirksam ist, um ein Nachfüllen, Verdichten und Umstellen auf Nachdruck und Halten desselben zu bewirken, und wobei die Stange mit einer unabhängigen Antriebsvorrichtung verbunden ist, die angebracht ist, um der Stange unter Kontrolle der Steuereinheit eine axiale Bewegung und Druckkraft zu verleihen.

2. System nach Anspruch 1,
**dadurch gekennzeichnet, dass**
der Verdrängungskörper (9) in dem Durchflusskanal in den unterschiedlichen Heißkanaldüsen- Modulen in axialer Richtung einstellbar angebracht ist und mit einer in axialer Richtung längsverlaufenden Durchgangsbohrung (7) versehen ist, durch die sich die in axialer Richtung bewegliche Stange (14) erstreckt, die an ihrem aus dem vorderen Teil des Verdrängungskörpers hervorstehenden Ende als dieser Kolben (15, 16) ausgelegt ist.

3. System nach Anspruch 1,
**dadurch gekennzeichnet, dass**
der Verdrängungskörper (9) in einem konisch geformten Durchflusskanal in einem zylinderförmigen Teil des Heißkanaldüsen- Moduls (5) angebracht ist, wobei der Zylinder angeordnet ist, um den Durchflusskanal (2) in dem Zuteilerblock (1) mit einem Teil des Heißkanaldüsen- Moduls zu verbinden, der den Kolben (15, 16) einbezieht.

4. System nach einem der Ansprüche 1 bis 3,
**dadurch gekennzeichnet, dass**
Positionssensoren mit der Steuereinheit des Systems verbunden sind, wobei die Positionssensoren paarweise mit Positionssensoren der Einspritzeinheit angebracht sind und deren Stellung relativ zu diesen einstellbar ist, und wobei diese Einstellbarkeit eine völlige oder teilweise vorübergehende ungehinderte Umstellung leisten wird, wenn die zu einem Heißkanaldüsen- Modul gehörende Einrichtung zur Erzeugung von Geschwindigkeit und Kraft die Entwicklung von Durchfluss und Druck der Schmelze von der Einspritzeinheit der Maschine übernimmt.

5. System nach einem der Ansprüche 1 bis 4,
**dadurch gekennzeichnet, dass**
der Verdrängungskörper (9) in einer an sich bekannten Art und Weise ein im wesentlichen konisch spitz zulaufendes Ende aufweist und per Hand in axialer Richtung verschiebbar ist, in Richtung eines kegelförmigen Sitzes (8) und von diesem weg, zur unabhängigen Einstellung des Schmelzfliesswiderstandes in dem Durchflusskanal von jedem Heißkanaldüsen- Modul, und dass die axiale Verschiebung durch einen Verschiebemechanismus in Form eines Schraubenmechanismus (10) eingestellt wird, wobei eine Mutter, die einen Teil davon bildet, per Hand gedreht werden kann, so dass ein mit Gewinde versehener Abschnitt der Welle in einem Ende des damit zusammenwirkenden Verdrängungskörpers, und damit auch der gesamte Verdrängungskörper (9), in axialer Richtung verschiebbar ist.

6. System nach Anspruch 5,
**dadurch gekennzeichnet, dass**
eine Maßskala (21) vorgesehen ist, um die aktuelle Stellung des Verdrängungskörpers und seine axiale Verschiebung abzulesen.

7. System nach einem der vorhergehenden Ansprüche,
**dadurch gekennzeichnet, dass**
ein mit der Steuereinheit verbundener Drucksensor (19) an der Öffnung von jedem Schmelzekanal (17) jeweils stromabwärts von dem Verdrängungskörper (9) oder dem Kolben (15, 16) angebracht ist.

8. Verfahren zum Spritzgiessen von thermoplastischen Werkstoffen und thermoplastischen Elastomeren in einer Spritzgiessmaschine, um in der gleichen Verfahrensfolge Einzelheiten von unterschiedlichem Gewicht, Größe und Form gleichzeitig in axialer Richtung verdrängbar zu formen in einem System mit unterschiedlichen Ziehdüseneinheiten, mittels einer Vorrichtung, die einen Zuteilerblock (1), eine Anzahl von Heißkanaldüsen- Modulen (4; 5), die jeweils mit ihrem eigenen von einer Anzahl von in dem Zuteilerblock vorgesehenen Durchflusskanälen (2) verbunden sind, eines im Durchflusskanal für jeden Heißkanaldüsen- Modul vorgesehenen Verdrängungskörpers (9) für ein stufenloses Einstellen des Schmelzflusses durch den Modul, und Mittel, um das Nachfüllen, Verdichten und Umstellen auf Nachdruck und Halten desselben zu bewirken, sowie eine Steuereinheit zur unabhängigen Steuerung und Überwachung der Prozesse in den unterschiedlichen Heißkanaldüsen- Modulen bei Verwendung eines Systems nach Anspruch 1,
**dadurch gekennzeichnet, dass**
der Schmelzfluss von dem Zuteilerblock in den unterschiedlichen Heißkanaldüsen- Modulen gesteuert wird durch individuelles Einstellen der axialen Position des dazugehörigen Verdrängungskörpers (9), wodurch unterschiedliche Befüllzeiten erzielt werden, um Druckspitzen in den unterschiedlichen Heißkanaldüsen- Modulen (5, 5) und Ziehdüseneinheiten des Systems zum Spritzgiessen rechtzeitig zu verteilen.

## Revendications

1. Système pour moulage par injection de thermoplastiques et thermo-élastomères dans une machine de moulage par injection pour mouler par injection des articles de différents poids, taille et forme, simultanément en un seul cycle de traitement, et comprenant un bloc d'alimentation (1), plusieurs modules à canaux chauffés (4, 5) dont chacun est relié à son propre profil parmi plusieurs profils d'écoulement (2) ménagés dans le bloc d'alimentation, une torpille (9) prévue dans le profil d'écoulement pour chaque module à canaux chauffés et prévue pour un réglage uniforme de l'écoulement de matière fondue à travers le module, et des moyens pour réaliser le remplissage final, la compression et le renversement vers la post-pression, ainsi que le maintien de la post-pression, et une unité de commande pour la commande et la surveillance individuelles des processus dans les différents modules à canaux chauffés,
**caractérisé en ce que**
le profil d'écoulement du module à canaux chauffés est muni d'une barre mobile (14) s'étendant axialement à travers, et qui, à son extrémité avant, est conçue comme un vérin (15, 16) qui est adapté pour fonctionner dans un espace de canal pour matière en fusion (17) en aval de la torpille (9) pour réaliser le remplissage final, la compression, le renversement vers la post-pression et le maintien de celle-ci, et laquelle barre est reliée à un dispositif d'entraînement individuel agencé de façon à donner à la barre un mouvement axial et une force de pression sous le contrôle de l'unité de commande.

2. Système selon la revendication 1,
**caractérisé en ce que**
la torpille (9) est agencée de manière axialement réglable dans le profil d'écoulement dans les différents modules à canaux chauffés et est munie d'un trou traversant axialement longitudinal (7), à travers lequel s'étend la barre axialement mobile (14) qui, à son extrémité faisant saillie de la partie avant de la torpille, est désignée comme ledit vérin (15, 16).

3. Système selon la revendication 1,
**caractérisé en ce que**
la torpille (9) est agencée dans un profil d'écoulement de forme conique dans une partie formant un cylindre du module à canaux chauffés (5), dans lequel ledit cylindre est agencé de façon à raccorder le profil d'écoulement (2) dans le bloc d'alimentation (1) avec une partie du module à canaux chauffés, qui incorpore ledit vérin (15, 16).

4. Système selon l'une quelconque des revendications 1 à 3,
**caractérisé en ce que**
des capteurs de position sont reliés à l'unité de commande du système, lesquels capteurs de position sont agencés par paires avec des capteurs de position de l'unité d'injection, et sont réglables en position par rapport à ceux-ci, et de telle sorte que cette ajustabilité confère un renversement entièrement libre ou partiellement transitoire lorsque les moyens de génération de vitesse et de force appartenant à un module à canaux chauffés acceptent les développements d'écoulement et de pression de la matière fondue provenant de l'unité d'injection de la machine.

5. Système selon l'une quelconque des revendications 1 à 4,
**caractérisé en ce que**
la torpille (9), d'une manière connue en soi, présente une extrémité sensiblement effilée et est déplaçable manuellement en direction axiale en direction et en provenance d'un siège effilé (8) pour un réglage individuel de la résistance à l'écoulement de matière fondue dans le profil d'écoulement de chaque module à canaux chauffés, et **en ce que** le déplacement axial est réglé au moyen d'un mécanisme de déplacement, sous la forme d'un mécanisme à vis (10), dans lequel un écrou faisant partie de celui-ci peut être manuellement tourné de telle sorte qu'une partie filetée de l'arbre à une extrémité de la torpille coopérant avec celui-ci puisse être déplacée axialement et ainsi, également toute la torpille (9).

6. Système selon la revendication 5,
**caractérisé en ce que**
une graduation (21) est ménagée pour lire la position courante de la torpille ainsi que son déplacement axial.

7. Système selon l'une quelconque des revendications précédentes,
**caractérisé en ce que**
un capteur de pression (19) relié à l'unité de commande est agencé à l'ouverture de chaque canal de matière fondue (17) respectivement en aval de la torpille (9) ou du vérin (15, 16).

8. Procédé pour moulage par injection de thermoplastiques et thermo-élastomères dans une machine de moulage par injection pour un moulage simultanément axialement déplaçable avec les mêmes caractéristiques de traitement, à savoir différents poids, taille et forme dans un système ayant différentes unités de filière, au moyen d'un dispositif incorporant un bloc d'alimentation (1), plusieurs modules à canaux chauffés (4, 5) dont chacun est relié à son propre profil parmi plusieurs profils d'écoulement (2) ménagés dans le bloc d'alimentation, une torpille (9) prévue dans le profil d'écoulement pour chaque module à canaux chauffés et prévue pour régler l'écoulement de matière fondue à travers le module de manière uniforme, et des moyens pour réaliser le remplissage final, la compression et le renversement vers la post-pression, ainsi que le maintien de la post-pression, et une unité de commande pour la commande et la surveillance individuelles des processus dans les différents modules à canaux chauffés, en utilisant un système selon la revendication 1,
**caractérisé en ce que**
l'écoulement de matière fondue à partir du bloc d'alimentation est régulé dans les différents modules à canaux chauffés, au moyen du réglage individuel de la position axiale de la torpille associée (9), de telle sorte qu'on obtienne différentes durées de remplissage afin de distribuer dans le temps des crêtes de pression dans les différents modules à canaux chauffés (5, 5) et unités de filière du système de moulage par injection.
